# EUROPEAN PATENT APPLICATION

(11) **EP 2 056 579 A1**
(43) Date of publication of application: **06.05.2009**
(21) Application number: 08005699.7
(22) Date of filing: 26.03.2008
(51) Int. Cl.: H04M 3/54

(54) **Gateway providing automatic call-transfer for VoIP**

(30) Priority: 31.10.2007 TW 96141048
(71) Applicant: Contrel Technology Co., Ltd., Sinshin Township, Tainan County 744 (TW)
(72) Inventor: Liu, Jen-Chi, Hsinchu City (TW); Lee, Bing-Huan, Niaosong Township Kaohsiung County (TW)
(74) Representative: Becker Kurig Straus

(57) **Abstract**

A VoIP gateway, a VoIP phone system and an auto call-transferring method for VoIP are disclosed. The method is used in the VoIP gateway with a plurality of predetermined IDs, wherein the method comprises the steps of: receiving a call connection request for a first predetermined ID form a calling end point; detecting if the first predetermined ID is in use; and establishing a call connection between the calling end point and a second predetermined ID when the first predetermined ID is in use.

## Description

### Field of the Invention

This invention relates to a VoIP gateway, a VoIP phone system and an auto call-transferring method, and more particularly, to a VoIP gateway for auto call-transferring.

### Background of the Invention

Voice over Internet Protocol (VoIP) is a protocol optimized for the transmission of voice through the Internet or other packet switched networks. VoIP is also known as IP phone, Internet telephony, Broadband telephony, Broadband Phone and Voice over Broadband. VoIP is often used in the internal network of companies for the transmission of voice or data, thereby simplifying the management and promoting production output. With the popularization of networks and the expanding of communication, VoIP is also applicable to long-distance calls. Due to the competition of the telecommunications industry and the statute modification, VoIP may also be applicable to the fixed network which has the characteristics of low call cost, low equipment cost, great expansibility and call quality. Therefore, VoIP has been regarded as a powerful competitor by the telecommunications industry.

In an IP phone system, the user needs user agent (UA) software or a device (such as a VoIP gateway) and a call server set up at an IP agency. The user needs to register a set of IP numbers, thereby allowing other users to call.

However, when the VoIP gateway is connected to a plurality of IP phone devices, each of the IP phone devices has to register a set of IP numbers, thereby allowing the IP phone devices to call at the same time. Otherwise, when only a set of IP numbers is used, the line of the IP numbers will tend to be busy. Furthermore, the VoIP gateway may have a plurality of predetermined identifications (ID) corresponding to the IP phone devices respectively. However, when a certain predetermined ID is in use, and other users keep calling the certain predetermined ID, the conventional VoIP gateway merely responds that the certain predetermined ID is in use, or provides a voicemail service, but cannot transfer the phone call to other IP phone devices automatically.

### Summary of the Invention

Therefore, an aspect of the present invention is to provide a VoIP gateway, a VoIP phone system and an auto call-transferring method to automatically transfer the call to the unused predetermined ID, thereby preventing the call from being missed or delayed.

According to an embodiment of the present invention, the auto call-transferring method is used for a VoIP gateway, wherein the VoIP gateway includes a plurality of predetermined identifications (ID) to allow at least one calling end point to communicate with, and the method comprises:
receiving a call connection request for a first predetermined ID from the
calling end point; detecting if the first predetermined ID is in use; establishing
a first call connection between the calling end point and the first predetermined ID when the first predetermined ID is not in use; and
establishing a second call connection between the calling end point and a
second predetermined ID when the first predetermined ID is in use, wherein
the second predetermined ID is not in use before the second call connection.

According to another embodiment of the present invention, the VoIP gateway is connected between at least one calling end and a plurality of call receiving end points, wherein the VoIP gateway comprises a plurality of predetermined IDs, a detecting element, a connecting switch element and a voice coding processor. Each of the predetermined IDs is electrically connected to one of the call receiving end points. The detecting element detects the status of each of the predetermined IDs. The connecting switch element selectively switches the connection between the network and the predetermined IDs, wherein the connecting switch element establishes a first call connection between the calling end point and the first predetermined ID when the first predetermined ID is not in use, and the connecting switch element establishes a second call connection between the calling end point and a second predetermined ID when the first predetermined ID is in use, and the second predetermined ID is not in use before the second call connection. The voice coding processor is electrically connected to the connecting switch element to process the voice signal.

According to another embodiment of the present invention, the VoIP phone system comprises at least one phone device, a plurality of call receiving end devices and at least one VoIP gateway. The phone device is disposed at a calling end point. The call receiving end devices are disposed at a plurality of call receiving end points. The VoIP gateway is connected between the phone device and the call receiving end devices, wherein the VoIP gateway comprises a plurality of predetermined IDs, a detecting element, a connecting switch element and a voice coding processor. Each of the predetermined IDs is electrically connected to one of the call receiving end points. The detecting element detects the status of each of the predetermined IDs. The connecting switch element selectively switches the connection between the network and the predetermined IDs, wherein the connecting switch element establishes a first call connection between the calling end point and the first predetermined ID when the first predetermined ID is not in use, and the connecting switch element establishes a second call connection between the calling end point and a second predetermined ID when the first predetermined ID is in use, and the second predetermined ID is not in use before the second call connection. The voice coding processor is electrically connected to the connecting switch element to process the voice signal.

Therefore, with the application of the disclosed in the embodiments of the present invention, the call can be automatically transferred to immediately deal with, thereby preventing the call from being missed or delayed.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Fig. 1 is a system block diagram showing a VoIP phone system according to a first embodiment of the present invention;
Fig. 2 is a block diagram showing a VoIP gateway according to a first embodiment of the present invention;
Fig. 3 is a flow diagram showing an auto call-transferring method according to a first embodiment of the present invention; and
Fig. 4 is a system block diagram showing a VoIP phone system according to a second embodiment of the present invention.

### Detailed Description of the Preferred Embodiment

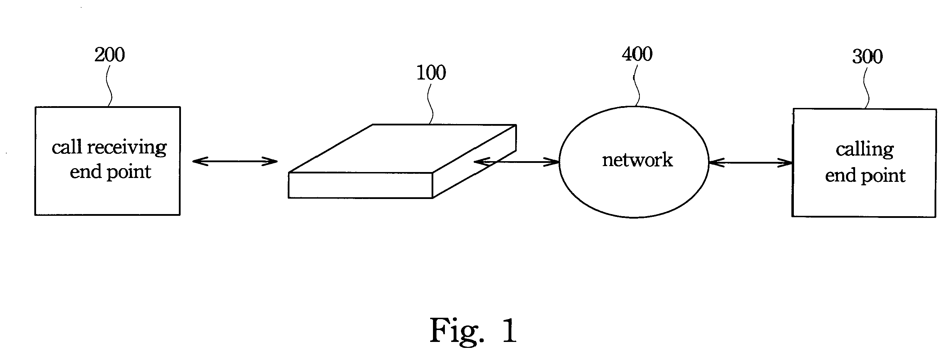

In order to make the illustration of the present invention more explicit and complete, the following description is stated with reference to Fig. 1 through Fig. 4.

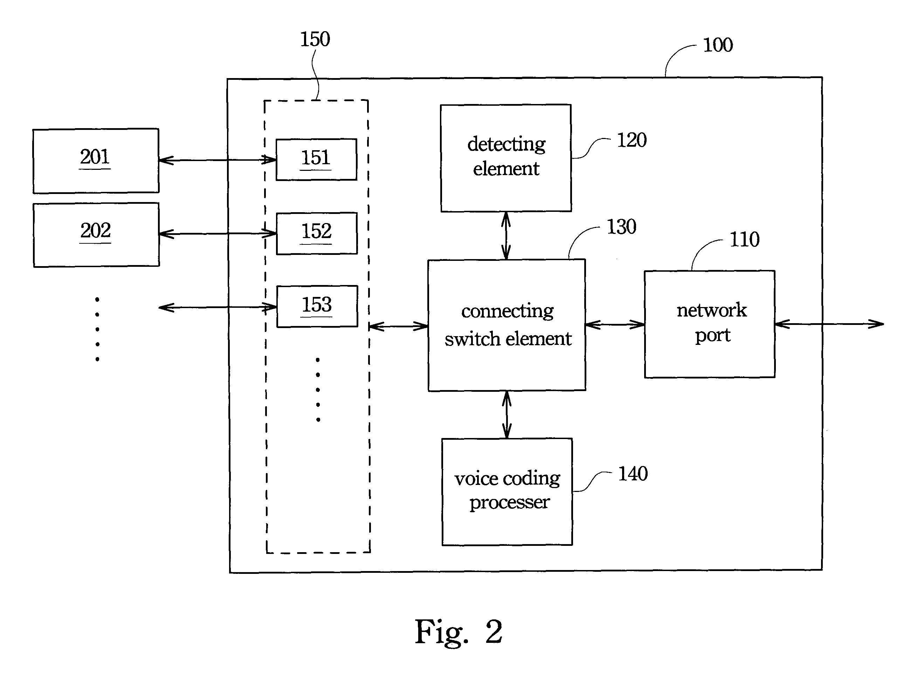

Refer to Fig. 1 and Fig. 2. Fig. 1 is a system block diagram showing a VoIP phone system according to a first embodiment of the present invention. Fig. 2 is a block diagram showing a VoIP gateway according to a first embodiment of the present invention. The auto call-transferring method of the present embodiment is used in at least one VoIP gateway 100, wherein the VoIP gateway 100 is electrically connected to a plurality of call receiving end points 200. Therefore, when a certain call receiving end point 201 is in use, the phone call can be transferred to the other call receiving end points 202 which are not in use.

Refer to Fig. 2 again. The VoIP gateway 100 of the present invention is connected between at least one calling end point 300 and the call receiving end points 200, thereby forming a VoIP phone system, wherein the VoIP phone system communicates according to an open communication protocol or a closed communication protocol, such as H.323 protocol, Session Initiation Protocol (SIP), H.248 protocol, SS7over IP/SIGTRAN protocol or the closed communication protocol for a communication software (such as Skype), wherein the VoIP gateway 100 is connected to the calling end point 300 through at least one network 400. The network 400 may be the Internet or an integrated service digital network (ISDN). The VoIP gateway 100 comprises a network port 110, a detecting element 120, a connecting switch element 130, a voice coding processor 140 and a plurality of predetermined identifications (ID) 150. The network port 110 (such as a RJ-45 port) is connected to the network 400. The detecting element 120 is connected between the connecting switch element 130 and the predetermined IDs to detect the status of each of the predetermined IDs 150 and feedback the detected status to the connecting switch element 130. The connecting switch element 130 is connected between the network port 110 and the predetermined IDs 150 to selectively switch the connection between the network 400 and the predetermined IDs 150. Namely, the connecting switch element 130 switches the connection between the calling end point 300 and the predetermined IDs 150. The voice coding processor 140 may be a digital signal processor (DSP) electrically connected to the connecting switch element 130 to process the voice signal, thereby transferring an analog voice signal to digital voice signal, or transferring a digital voice packet to the analog voice signal. Each of the predetermined IDs 150 is electrically connected to one of the call receiving end points 200. Therefore, the calling end point 300 may communicate with the call receiving end points 200 through the connection with the predetermined IDs 150. In the present embodiment, each of the call receiving end points 200 may include at least one call receiving end device (not shown), such as a telephone (such as a Skype phone device), a wireless telephone, a fax, a private branch exchange (PBX) or a computer device with an immediate voice software, and the call receiving end device corresponds to each of the predetermined IDs 150. The predetermined IDs 150 may be a set of phone (telephone or phone line) connecting ports according to a foreign exchange station (FXS) interface specification or a foreign exchange office (FXO) interface specification. Namely, the VoIP gateway 100 may be directly connected to any phone device (such as a telephone, a wireless telephone, a fax or a PBX) with the public switched telephone network (PSTN), and also may be directly connected to a phone line of the PSTN or an internal line of the PBX.

Refer to Fig. 1 again. The calling end point 300 may include at least one VoIP phone device, such as a VoIP gateway, an asymmetric digital subscriber line (ADSL) modem, a cable modem or an access point (AP).

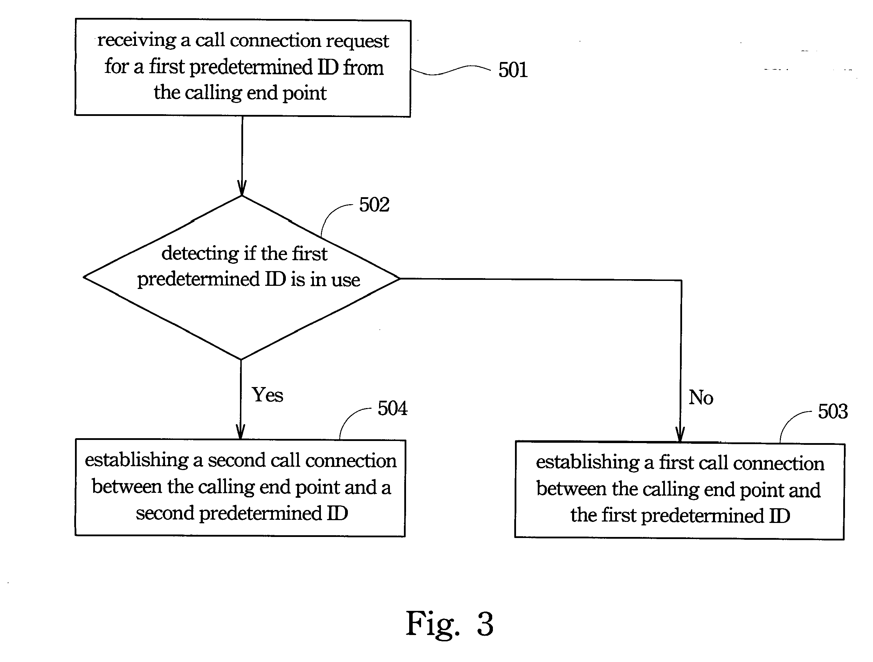

Refer to Fig. 3. Fig. 3 is a flow diagram showing an auto call-transferring method according to a first embodiment of the present invention. When proceeding the call-transferring method of the present embodiment, first, a call connection request for a first predetermined ID 151 from the calling end point 300 is received (step 501). Namely, the calling end point 300 sends a call connection request to a first calling receiving point 201 according to the first predetermined ID 151. At this time, the VoIP gateway 100 receives the call connection request for the first predetermined ID 151 from the calling end point 300. Next, the detecting element 120 detects if the first predetermined ID 151 is in use (step 502), and sends the detected status to the connecting switch element 130. Then, the connecting switch element 130 selectively switches the connection of the network 400 and the predetermined IDs 150. When the first predetermined ID 151 is not in use, the connecting switch element 130 switches the connection with the first predetermined ID 151, thereby establishing a first call connection between the calling end point 300 and the first predetermined ID 151 (step 503). When the first predetermined ID 151 is in use, the connecting switch element 130 switches the connection with one of the unused predetermined IDs 150, such as a second predetermined ID 152, thereby establishing a second call connection between the calling end point 300 and a second predetermined ID 152 (step 504), wherein the second predetermined ID 152 is not in use before the second call connection. Therefore, when the calling end point 300 calls the first calling receiving point 201 according to the first predetermined ID 151, and the first calling receiving point 201 is in use, the VoIP gateway 100 may automatically and immediately transfer the call from the calling end point 300 to a second calling receiving point 202 according to the second predetermined ID 152 to deal with the call there from, thereby preventing the call from being missed.

For example, the second predetermined ID 152 may correspond to an internal telephone exchanger of a company. When the first predetermined ID 151 is in use, the VoIP gateway 100 of the present embodiment can automatically and immediately transfer the call to the internal telephone exchanger (the second predetermined ID 152), and the telephone operator can immediately deal with the call, thereby preventing the call from being missed or delayed.

It is worth mentioning that when the first predetermined ID 151 and the second predetermined ID 152 are in use, the call form the calling end point 300 can be automatically transferred to one of the other unused predetermined IDs 150 (such as a third predetermined ID 153) to establish the call connection.

Therefore, the VoIP gateway, the VoIP phone system land the auto call-transferring method of the present embodiment can automatically transfer the call form the calling end point to immediately deal with, thereby preventing the call from being missed or delayed.

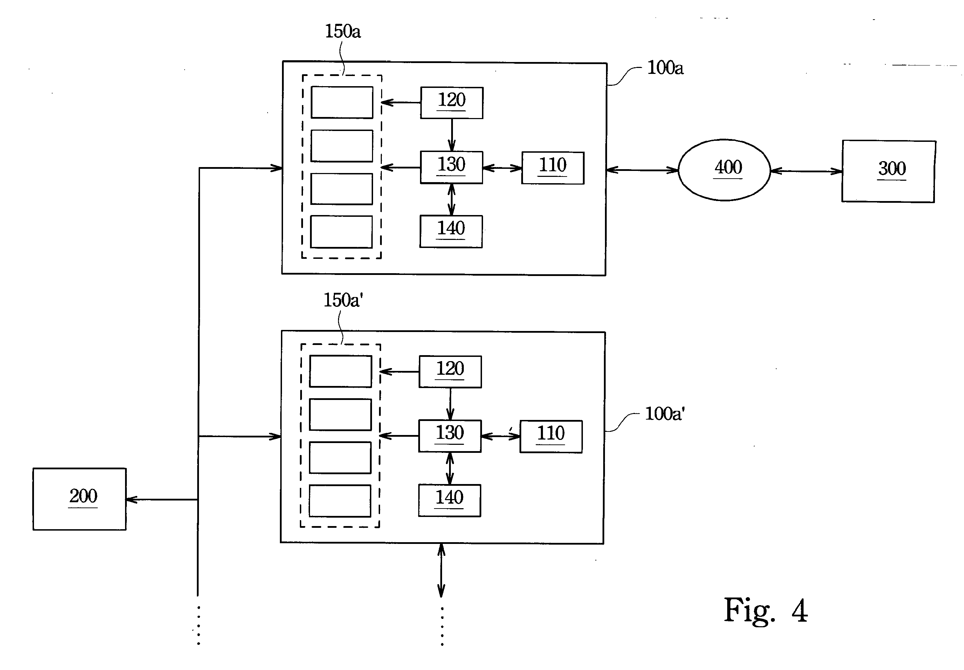

Refer to Fig. 4. Fig. 4 is a system block diagram showing a VoIP phone system according to a second embodiment of the present invention. Some reference numerals shown in the first embodiment are used in the second embodiment of the present invention. The construction shown in the second embodiment is similar to that in the first embodiment with respect to configuration and function, and thus is not stated in detail herein.

Refer to Fig. 4 again, in comparison with the first embodiment, the VoIP phone system may comprises a plurality of VoIP gateways 110a connected between the calling end point 300 and the calling receiving points 200, wherein the VoIP gateways 110a are connected in parallel, thereby increasing the number of the predetermined IDs 150a. Therefore, when all the predetermined IDs 150a of a certain VoIP gateway 110a are in use, the call from the calling end point 300 can be transferred to another VoIP gateway 110a' which includes at least one unused predetermined ID 150a', thereby allowing a call-forwarding step to establish a call connection between the calling end point 130 and one (the unused predetermined ID 150a') of the predetermined IDs of another VoIP gateway. Therefore, the call can be transferred to the unused predetermined ID 150a' to prevent the call from being missed or delayed.

Therefore, the VoIP gateway, the VoIP phone system and auto call-transferring method shown in the respective embodiments of the present invention can automatically transfer the call to the unused predetermined ID, thereby preventing the call from being missed or delayed.

As is understood by a person skilled in the art, the foregoing embodiments of the present invention are strengths of the present invention rather than limiting of the present invention. It is intended to cover various modifications and similar arrangements included within the spirit and scope of the appended claims, the scope of which should be accorded the broadest interpretation so as to encompass all such modifications and similar structure.

## Claims

1. An auto call-transferring method for a VoIP gateway, wherein the VoIP gateway includes a plurality of predetermined identifications (ID) to allow at least one calling end point to communicate with, and the method comprises:
receiving a call connection request for a first predetermined ID from the calling end point;
detecting if the first predetermined ID is in use;
establishing a first call connection between the calling end point and the first predetermined ID when the first predetermined ID is not in use; and
establishing a second call connection between the calling end point and a second predetermined ID when the first predetermined ID is in use, wherein the second predetermined ID is not in use before the second call connection.

2. The method as claimed in claim 1, wherein the VoIP gateway is electrically connected to a plurality of call receiving end points, and each of the predetermined IDs is electrically connected to one of the call receiving end points, and each of the call receiving end points includes at least one call receiving end device, the call receiving end device is selected from a group consisting of a telephone, a wireless telephone, a fax, a private branch exchange and a computer device with an immediate voice software.

3. The method as claimed in claim 1, wherein the calling end point includes at least one VoIP phone device, and VoIP phone device is selected from a group consisting of a VoIP gateway, an asymmetric digital subscriber line (ADSL) modem, a cable modem and an access point (AP).

4. The method as claimed in claim 1, further comprising; proceeding a call-forwarding step to establish a call connection between the calling end point and one of the predetermined IDs of another VoIP gateway.

5. A VoIP gateway connected between at least one calling end and a plurality of call receiving end points, wherein the VoIP gateway comprises:
a plurality of predetermined identifications (ID), wherein each of the predetermined IDs is electrically connected to one of the call receiving end points;
a detecting element to detect the status of each of the predetermined IDs;
a connecting switch element to selectively switch the connection between the network and the predetermined IDs, wherein the connecting switch element establishes a first call connection between the calling end point and the first predetermined ID when the first predetermined ID, is not in use, and the connecting switch element establishes a second call connection between the calling end point and a second predetermined ID when the first predetermined ID is in use, and the second predetermined ID is not in use before the second call connection; and
a voice coding processor electrically connected to the connecting switch element to process the voice signal.

6. The VoIP gateway as claimed in claim 5, wherein the voice coding processor is a digital signal processor (DSP).

7. The VoIP gateway as claimed in claim 5, further comprising a network port to connect with the network.

8. The VoIP gateway as claimed in claim 5, wherein the predetermined IDs accord a foreign exchange station (FXS) interface specification or a foreign exchange office (FXO) interface specification.

9. A VoIP phone system, comprising:
at least one phone device disposed at a calling end point;
a plurality of call receiving end devices disposed at a plurality of call receiving end points; and
at least one VoIP gateway connected between the phone device and the call receiving end devices, wherein the VoIP gateway comprises:
a plurality of predetermined identifications (ID), wherein each of the predetermined IDs is electrically connected to one of the call receiving end points;
a detecting element to detect the status of each of the predetermined IDs;
a connecting switch element to selectively switch the connection between the network and the predetermined IDs, wherein the connecting switch element establishes a first call connection between the calling end point and the first predetermined ID when the first predetermined ID is not in use, and the connecting switch element establishes a second call connection between the calling end point and a second predetermined ID when the first predetermined ID is in use, and the second predetermined ID is not in use before the second call connection; and
a voice coding processor electrically connected to the connecting switch element to process the voice signal.

10. The VoIP phone system as claimed in claim 9, wherein the system comprises a plurality of VoIP gateways connected in parallel, and when the predetermined IDs of one of the VoIP gateways are in use, the connecting switch element proceeds a call-forwarding step to establish a call connection between the calling end point and an unused predetermined ID of another one of the VoIP gateways.
